# EUROPÄISCHE PATENTSCHRIFT

(11) **EP 2 928 157 B1**
(45) Veröffentlichungstag und Bekanntmachung des Hinweises auf die Patenterteilung: **18.12.2019**
(21) Anmeldenummer: 14163511.0
(22) Anmeldetag: 04.04.2014
(51) Int. Cl.: H04L 29/08, H04L 29/06

(54) **Verfahren zur Analyse und/oder Evaluierung von mindestens einem Ereignis einer technischen Anlage**
Method for analysing and/or evaluating of at least one event of a technical facility
Procédé d'analyse et/ou d'évaluation d'au moins un événement au sein d'une installation technique

(43) Veröffentlichungstag der Anmeldung: 07.10.2015
(73) Patentinhaber: Siemens Aktiengesellschaft, 80333 München (DE)
(72) Erfinder: Storl, Alexander, 91077 Hetzles (DE); Pauer, Steffen, 91781 Weißenburg (DE); Roshchin, Mikhail, 85622 Feldkirchen (DE)

(56) Entgegenhaltungen:
- WO-A1-2007/036176
- DE-C1- 19 528 067
- US-A1- 2013 185 592

## Beschreibung

Die Erfindung betrifft ein Verfahren zur Analyse und/oder Evaluierung von mindestens einem Ereignis einer technischen Anlage aus einer Vielzahl von Protokolldateien eines Automatisierungssystems der technischen Anlage, wie einer Kraftwerksanlage.

Großtechnische Anlagen, wie Dampf- und Gasturbinenanlagen, chemische Anlagen, Stahlwerke, Walzwerke, sind komplexe technische Systeme, die eine Vielzahl von (z. B. mehreren hundert) Komponenten, wie Sensoren, Aktoren, Antriebe etc., aufweisen, von denen jeder gegebenenfalls mekomphrere Messwerte pro Sekunde zur weiteren Verarbeitung und Übertragung erfasst und bereitstellt.

Zur Überwachung und Steuerung von Komponenten, wie Turbine, Verdampfer, Generator, Sensoren, Antriebe, Aktoren der technischen Anlage, werden die von den Komponenten erhaltenen Daten verarbeitet, analysiert und interpretiert. So ist es möglich, Abweichungen von einem vorgegebenen Normalzustand so früh wie möglich zu erkennen und gegebenenfalls eine Beschädigung und/oder einem Ausfall der Komponente, wie der Turbine, zu verhindern.

Hierbei ist die Menge an auszuwertenden Daten/Messsignalen und die Komplexität möglicher Abhängigkeiten zwischen den Daten/Messsignalen üblicherweise viel zu groß, als dass eine wirksame Analyse der Daten/Messsignalen von einer Bedienperson möglich wäre.

Die technische Anlage umfasst dabei zur Steuerung und Überwachung der Anlage ein Automatisierungssystem, das im Allgemeinen in eine Bedien- und Beobachtungsebene, eine Automatisierungs-/Prozessebene und eine Feldebene unterteilt ist, die über eine Kommunikationseinheit, insbesondere einen oder mehrere Datenbussysteme, miteinander verbunden sind.

Die Daten, wie Messsignale, Zustandssignale einzelner Komponenten, wie Sensoren, Aktoren, Antriebe, Turbine, Automatisierungseinheiten etc., werden üblicherweise in Protokolldateien zusammengefasst, die ein oder mehrere aufgetretene Ereignisse einer oder mehrerer Komponenten und/oder Komponentengruppen beschreiben, und an betreffende Komponenten der technischen Anlage übertragen.

In der Praxis automatischer Steuerung und/oder Überwachung gibt es das Problem der steigenden Anzahl von generierten Protokolldateien bei Auftreten eines Ereignisses in der technischen Anlage, zum Beispiel bei Auftreten eines Störfalls. Typische Ursachen hierfür sind z.B. defekte Sensoren und/oder defekte Anlagenteile, die zusätzliche Messwerte und somit zusätzliche Protokolldateien liefern. Dies erschwert dem Bedienpersonal die Übersichtlichkeit und die Erfassbarkeit der generierten Protokolldateien. Zudem ist es schwierig für das Bedienpersonal, das aufgetretene Ereignis richtig zu beurteilen.

Aus der WO 2007/036176 ist ein Verfahren zum Bereitstellen eines eine Fehlermeldung enthaltenden Datensatzes von einer Datenverarbeitungseinrichtung eines Automatisierungssystems bekannt, bei dem ein auf der Datenverarbeitungseinrichtung des Automatisierungssystems installiertes Überwachungsmodul die Datenverarbeitungseinrichtung des Automatisierungssystems daraufhin überwacht, ob ein auf dieser ablaufendes Anwendungsprogramm einen Programmablauffehler erzeugt. Beim Auftreten eines Programmablauffehlers wird ein eine Fehlermeldung bezüglich des Programmablauffehlers enthaltender Datensatz erzeugt. Der Datensatz wird von der Datenverarbeitungseinrichtung des Automatisierungssystems zum Abruf bereitgestellt.

In der US 2013/0185592 A1 ist ein Verfahren zur automatischen Fehlerdiagnose beschrieben. Das Verfahren beinhaltet das Sammeln von Protokolldaten mittels eines Prozessors, wobei die Protokolldaten Kodierungen einer Vielzahl von Komponenten eines Datenverarbeitungssystems umfassen. Die Protokolldaten werden in mindestens ein vorab definiertes Symptom übersetzt, wobei jedes Symptom mit wenigstens einer Kodierung der Protokolldaten assoziiert ist. Aus einer Datensammlung wird dann wenigstens ein Fehler ausgewählt, für den jedes der Symptome zutrifft. Anschließend wird für jeden Fehler ein Einflussfaktor berechnet und jeder Fehler auf der Grundlage des Einflussfaktors hinsichtlich der Wahrscheinlichkeit seines Auftretens geordnet.

Die Aufgabe der Erfindung besteht darin, ein einfaches Verfahren zur Analyse und/oder Evaluierung von mindestens einem Ereignis aus einer Vielzahl von Protokolldateien eines Automatisierungssystems einer technischen Anlage anzugeben.

Diese Aufgabe wird gemäß den Merkmalen der unabhängigen Patentansprüche gelöst. Bevorzugte Ausführungsformen sind insbesondere den abhängigen Patentansprüchen entnehmbar.

Das erfindungsgemäße Verfahren umfasst die Schritte des unabhängigen Verfahrensanspruchs 1.

Das erfindungsgemäße Verfahren ermöglicht eine Reduzierung der Vielzahl von generierten Protokolldateien zu einer Sequenz von gruppierten relevanten Protokolldateien. Durch eine solche Reduzierung durch Filterung und Sortierung/Gruppierung ist eine einfache und schnelle Analyse der einzelnen für das Ereignis relevanten Protokolldateien in dieser Sequenz möglich. Insbesondere können einfache Abhängigkeiten von relevanten Protokolldateien in den ermittelten Sequenzen und/oder deren Korrelationen bestimmt werden.

In einer einfachen Ausführungsform ist das erfindungsgemäße Verfahren gemäß Verfahrensansprüchen 2-11 in einer Komponente eines Automatisierungssystems einer technischen Anlage implementiert, wobei das Automatisierungssystem mindestens eine Bedien- und Beobachtungsebene, eine Automatisierungs-/Prozess-Ebene und eine Feldebene, die miteinander über ein Kommunikationssystem verbunden sind, umfasst, wobei in mindestens einer der Ebenen das Verfahren implementiert ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: schematisch ein Ausführungsbeispiel für ein Automatisierungssystem zur Steuerung und Überwachung einer technischen Anlage, und
- FIG 2: schematisch ein Ausführungsbeispiel für ein Verfahren zur Analyse und Bewertung von Protokolldateien, die im Automatisierungssystem generiert werden.

Einander entsprechende Teile sind in allen Figuren mit den gleichen Bezugszeichen versehen.

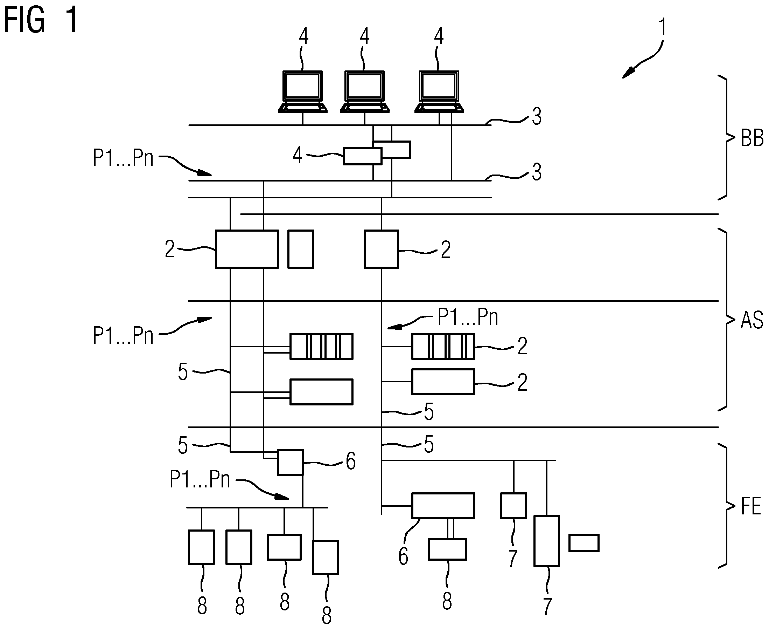

Figur 1 zeigt schematisch in Blockdarstellung ein Ausführungsbeispiel für ein Automatisierungssystem 1 einer technischen Anlage, wie einer Kraftwerksanlage oder einer Chemieanlage.

Das Automatisierungssystem 1 umfasst in einer Prozessebene AS (auch Automatisierungsebene genannt) eine Anzahl von Automatisierungsgeräten 2, die über einen gemeinsamen Datenbus 3 miteinander und mit einer Leiteinheit 4 in einer Bedien- und Beobachtungsebene BB verbunden sind und kommunizieren. Die Automatisierungsgeräte 2 sind darüber hinaus über einen Feldbus 5 mit Feldgeräten 6 in einer Feldebene FE verbunden und kommunizieren miteinander.

Der Datenbus 3 kann beispielsweise ein Ethernet-Bus oder eine andere geeignete Datenübertragungseinheit sein. Der Feldbus 5 kann beispielsweise ein ethernet-basierter Feldbus 5 oder als eine andere geeignete Datenübertragungseinheit drahtlos oder drahtgebunden sein. Der Datenbus 3 und/oder der Feldbus 5 können dabei ein Computernetzwerk bilden.

Die Automatisierungsgeräte 2 können sowohl aus frei programmierbaren als auch aus speicherprogrammierbaren Prozessoren, insbesondere einer Prozessoreinheit, aufgebaut sein und steuern, regeln und/oder überwachen jeweils mehrere Komponentengruppen 7 oder Teilsysteme der einzelnen Anlagenteile der technischen Anlage. Insbesondere umfasst das Steuern, Regeln und/oder Überwachen der technischen Anlage auch eine Analyse und sonstige Verarbeitung der Daten, wie Messsignale, Steuersignale, Ein- und Ausgangssignale, Zwischensignale, gespeicherte Daten, Verarbeitungsdaten.

Die Leiteinheiten 4 können Datenverarbeitungseinheiten, wie ein Personalcomputer oder eine andere geeignete Bedien- und Beobachtungseinheit sein, mittels welcher die technische Anlage überwacht und gesteuert wird.

Die Feldgeräte 6 können beispielsweise kompakte frei programmierbare oder speicherprogrammierbare Steuerungen, insbesondere eine Prozessoreinheit und/oder zumindest eine teilweise festverdrahtete oder logische Schaltungsanordnung, sein, die einzelne Komponenten 8 von Anlagenteilen, wie Messfühler (Sensoren) und/oder Stellglieder (Aktoren), steuern, regeln und/oder überwachen und die über den Feldbus 5 zwecks Kommunikation mit dem Automatisierungsgerät 2 (auch Steuerungsgerät genannt) verbunden sind.

Beim Betrieb einer technischen Anlage, wie einer Kraftwerksanlage, werden über den Datenbus 3 und den Feldbus 5 große Datenmengen in Form von Protokolldateien P1 bis Pn, die Steuerbefehle, Zustandsmeldungen und/oder Störmeldungen umfassen, bewegt, die in der Leiteinheit 4 durch Steuereingriffe ausgelöst bzw. auf Bildschirmen oder anderen Sichtgeräten der Leiteinheit 4 sichtbar gemacht werden. Dabei sind, insbesondere bei Inbetriebnahme und beim An-/Abfahren der Anlage, eine Vielzahl von Steuereingriffen erforderlich, die eine entsprechend große Anzahl von zu beobachtenden Rückmeldungen zur Folge haben. Dies führt zu einer nicht unerheblichen Belastung des Bedienpersonals.

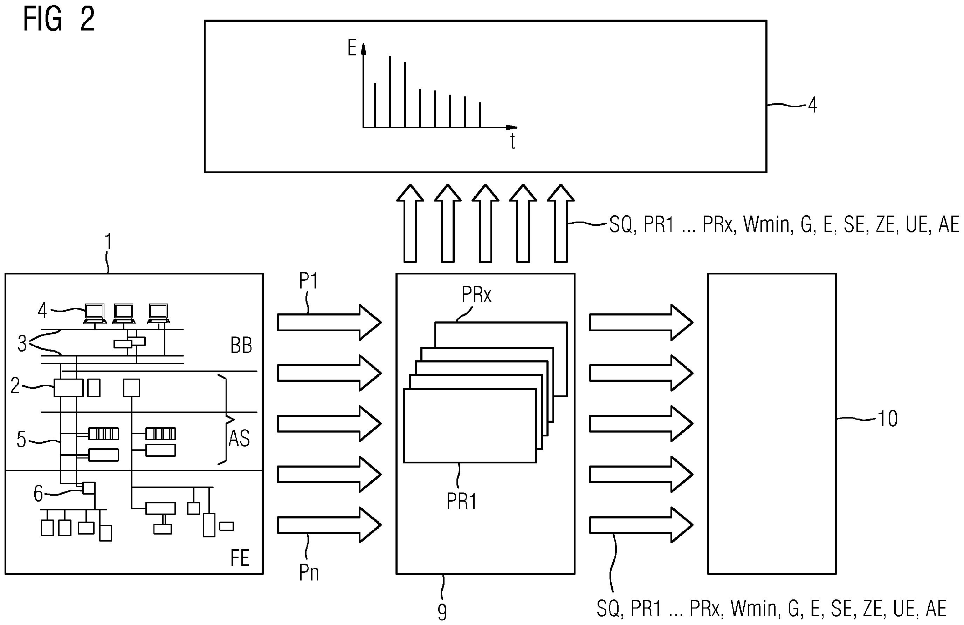

Figur 2 zeigt schematisch ein Ausführungsbeispiel für ein Verfahren zur Analyse und Bewertung von Protokolldateien P1 bis Pn, die im Automatisierungssystem 1 generiert werden und über den Datenbus 3 und/oder den Feldbus 5 übertragen und zwischen den Einheiten des Automatisierungssystems 1, insbesondere zwischen den Bedieneinheiten 4, den Automatisierungsgeräten 2 und den Feldgeräten 6, ausgetauscht werden.

Die Protokolldateien P1 bis Pn umfassen jeweils zumindest einen Erfassungs-Zeitstempel und einen Text, insbesondere eine Nachricht, eine Meldung, einen Zustandstext, welche mindestens ein Ereignis beschreiben. Zusätzlich können die Protokolldateien P1 bis Pn als Text eine Systemzeit, eine Versions-/Revisionsnummer und weitere Informationen umfassen. Dabei können beispielsweise mehrere Protokolldateien P1 bis Pn ein Ereignis oder mehrere Ereignisse beschreiben. Als Protokolldateien P1 bis Pn werden beispielsweise in einem Automatisierungssystem 1 einer technischen Anlage verschiedene *log-, *xml-, *txt-, *nfo- und/oder *dmp-Dateien erzeugt und generiert.

In zumindest einer der Komponenten des Automatisierungssystems 1 ist insbesondere ein Computerprogrammprodukt implementiert, das direkt in einen Speicher eines digitalen Computers, wie einer Leiteinheit 4, ladbar ist, umfassend Programmcodeteile, die dazu geeignet sind, Schritte des nachfolgend beschriebenen Verfahrens durchzuführen. Alternativ kann das Computerprogrammprodukt auch in ein Automatisierungsgerät geladen werden.

Alternativ kann ein computerlesbares Speichermedium, z.B. ein beliebiger Speicher, vorgesehen sein, der von einem Computer, wie einer Leiteinheit 4, ausführbare Anweisungen (z.B. in Form von Programmcodes) umfasst, die dazu geeignet sind, dass die Leiteinheit 4 Schritte des nachfolgend beschriebenen Verfahrens durchführt.

Das als ein Protokollanalysator 9 implementierte Verfahren zur Analyse und/oder Evaluierung von mindestens einem Ereignis E in der technischen Anlage umfasst zumindest folgende Schritte:
- Ermitteln einer Anzahl von relevanten Protokolldateien PR1 bis PRx aus einer Vielzahl von im laufenden Betrieb des Automatisierungssystems 1 generierten Protokolldateien P1 bis Pn für ein oder mehrere Ereignisse E anhand mindestens eines Protokollparameters,
- Kodieren der relevanten Protokolldateien PR1 bis PRx mittels mindestens eines zugehörigen Protokoll-Codes C,
- Vorgabe mindestens eines Schlüsselparameters S für die Analyse und/oder die Evaluierung, Vorgabe zum Beispiel eines Schlüsselereignisses SE und/oder eines Schlüsselzeitpunkts/- raums,
- Identifizieren von mehrfachen, insbesondere doppelten relevanten Protokolldateien PR1 bis PRx anhand des mindestens einen Schlüsselparameters S aus den relevanten Protokolldateien PR1 bis PRx, und
- Zusammenfassen der relevanten Protokolldateien PR1 bis PRx in eine Anzahl von Sequenzen SQ von relevanten Protokolldateien PR1 bis PRx anhand der Wiederholungsrate des Schlüsselparameters S im zu analysierenden Zeitfenster.

Beim Zusammenfassen und/oder Ermitteln der relevanten Protokolldateien PR1 bis PRx werden beispielsweise alle in einem Erfassungs-Zeitraum von beispielsweise 20 s um ein aufgetretenes, vorgegebenes oder ausgewähltes Ereignis E generierten Protokolldateien P1 bis Pn als relevante Protokolldateien PR1 bis PRx aus der Vielzahl der generierten Protokolldateien P1 bis Pn zur Analyse herausgefiltert.

Alternativ zur Ermittlung und Filterung der relevanten Protokolldateien PR1 bis PRx, welche näher analysiert werden sollen, anhand deren Erfassungs-Zeitstempeln, kann auch beispielsweise ein Erfassungsort, an welchem ein Ereignis E aufgetreten ist, vorgegeben werden. Als relevante Protokolldateien PR1 bis PRx werden dann alle im Bereich des Erfassungsortes generierten Protokolldateien ermittelt oder herausgefiltert und zusammengefasst. Zur Reduzierung der Anzahl der zu analysierenden und somit der relevanten Protokolldateien PR1 bis PRx können als Protokollparameter oder -kriterium alternativ oder zusätzlich ein Erfassungs-Zeitraum und/oder eine Erfassungsart verwendet werden.

Beim Kodieren der relevanten Protokolldateien PR1 bis PRx werden diese mittels mindestens eines zugehörigen Protokoll-Codes C beispielsweise derart kodiert, dass jene relevante Protokolldatei PR1 bis PRx mit dem Protokolltext "Normal Stop in Progress" beispielsweise mit dem Buchstaben "A" kodiert wird und jene mit dem Protokolltext "Emergency Stop" beispielsweise mit dem Buchstaben "E" kodiert wird. Hierdurch wird die Analyse und weitere Verarbeitung der relevanten Protokolldateien PR1 bis PRx deutlich vereinfacht, indem einfache Analysealgorithmen verwendet werden können. Alternativ zum Kodieren der relevanten Protokolldateien PR1 bis PRx mittels eines Buchstaben-Codes kann ein anderer alphanumerischer Code verwendet werden.

Als der mindestens eine Schlüsselparameter S für die Analyse und/oder die Evaluierung wird insbesondere ein Schlüsselereignis SE und/oder ein Schlüsselzeitpunkt/-raum ermittelt oder vorgegeben. So kann beispielsweise als Schlüsselereignis SE ein Ausfall einer Pumpe definiert sein, so dass bei Auftreten des Ereignisses E - Ausfall der Pumpe - automatisch das Analyseverfahren gestartet wird. Dabei werden alle im vorgegebenen Zeitraum beispielsweise von 1 s, 50 ms oder 20 ms vor und nach dem Ausfall der Pumpe um die Pumpe herum generierte Protokolldateien als relevante Protokolldateien PR1 bis PRx ermittelt und entsprechend kodiert, beispielsweise als fortlaufende Buchstaben-Kette: A, B, A, C oder A, C, D, B, C, A, E, K.

Anschließend, insbesondere nach dem Kodieren, werden mehrfache, insbesondere doppelte relevante Protokolldateien PR1 bis PRx aus der Kette von das Ereignis E beschreibenden relevanten Protokolldateien PR1 bis PRx gefiltert oder entfernt. Beispielsweise werden aus einer Kette von relevanten Protokolldateien PR1 bis PRx mit der Kode-Folge von A, B, A, C eine der doppelten Protokolldateien PR1 bis PRx mit dem Kode "A" entfernt, wenn zwischen diesen beiden Protokolldateien PR1 und PR3 mit dem Kode "A" ein Zeitfenster von weniger als eine Minute liegt. Ist hingegen das Zeitfenster zwischen diesen größer als eine Minute, so verbleiben beide Protokolldateien PR1 und PR3 in der Analyse. Die Zeiträume und -fenster sind variabel in Abhängigkeit von der Protokollart und dem Protokollinhalt der betreffenden relevanten Protokolldateien PR1 bis PRx und können im ms-, s- oder min-Bereich liegen.

Das Verfahren sieht weiter vor, dass die relevanten Protokolldateien PR1 bis PRx anhand der Wiederholungsrate des Schlüsselparameters S im zu analysierenden Zeitfenster in eine Anzahl von Sequenzen SQ von relevanten Protokolldateien PR1 bis PRx gruppiert werden. Insbesondere werden die relevanten Protokolldateien PR1 bis PRx zeitlich gruppiert. Beispielsweise wird eine erste Gruppe G1 von relevanten Protokolldateien PR1 bis PR7 vor dem Auftreten des Schlüsselparameters S, insbesondere des Schlüsselereignisses SE, und eine zweite Gruppe G2 von relevanten Protokolldateien PR8 bis PR12 nach dem Auftreten des Schlüsselparameters S, insbesondere des Schlüsselereignisses SE, gebildet. Hierdurch kann die weitere Analyse gruppen- und/oder sequenzweise durchgeführt werden.

Insbesondere durch weitere Unterteilung der mindestens einen Sequenz SQ, welche das Ereignis E beschreibt, in Gruppen G1, G2 kann eine einfache und schnelle Gruppenanalyse und -auswertung von wenigen Meldungen vor dem Auftreten des Schlüsselereignisses SE separat von der Auswertung der wenigen Meldungen nach dem Auftreten des Schlüsselereignisses SE durchgeführt werden.

Beispielsweise werden die zu analysierenden relevanten Protokolldateien PR1 bis PRx mit der Kode-Folge "A,C,D,B,C,A,E,K,B,C,D,A,K,E" kodiert und wobei als Schlüsselereignis SE die relevanten Protokolldatei PRx mit dem Kode "K" ermittelt wird. Zur separaten Analyse der relevanten Protokolldateien PR1 bis PRx vor und nach dem Schlüsselereignis SE mit dem Kode "K" können die relevanten Protokolldateien PR1 bis PRx beispielsweise wie folgt gruppiert werden:
G1 = [B,C,A,E,K,B,C] oder [B,C,A,E] oder [C,D,A],
G2 = [C,D,A,K,E] oder [B,C] oder [E].

Beim Initialisieren oder Set-up des Verfahrens können optional als Schlüsselparameter S ein Zielereignis ZE und/oder ein Startereignis AE zur Ermittlung und zum Zusammenstellen der zu analysierenden mindestens einen Sequenz SQ von relevanten Protokolldateien PR1 bis PRx vorgegeben oder ermittelt werden.

Darüber hinaus kann optional eine Minimalsequenzlänge zur Ermittlung und zum Zusammenstellen der zu analysierenden Sequenz SQ von relevanten Protokolldateien PR1 bis PRx vorgegeben werden.

Ferner sieht das Verfahren vor, dass beispielsweise innerhalb einer ermittelten Sequenz SQ jene relevanten Protokolldateien PR1 bis PRx zu einer weiteren Gruppe G innerhalb der Sequenz SQ zusammengefasst werden, welche zur gleichen Zeit erfasst oder generiert wurden und somit den gleichen Erfassungs-Zeitstempel aufweisen. Hierdurch ist eine zeitgenaue Analyse von relevanten Protokolldateien PR1 bis PRx einfach und sicher separierbar von anderen Analysen. Insbesondere ist der Zeitaufwand zur Verarbeitung und Analyse von Zeitabhängigkeiten der relevanten Protokolldateien PR1 bis PRx zu dem zu untersuchenden Ereignis E deutlich reduziert.

Ferner sieht das Verfahren vor, dass weitere Zeitabhängigkeiten zwischen den relevanten Protokolldateien PR1 bis PRx innerhalb der ermittelten Sequenz SQ und/oder der ermittelten Gruppe G bestimmt werden. Beispielsweise können die relevanten Protokolldateien PR1 bis PRx innerhalb der ermittelten Sequenz SQ und/oder der ermittelten Gruppe G zeitfolgerichtig aufsteigend oder absteigend und somit chronologisch sortiert werden. Es können Erstmeldungen oder Anfangsmeldungen anhand der relevanten Protokolldateien PR1 bis PRx mit dem ältesten Erfassungs-Zeitstempel ermittelt werden. Zusätzlich oder alternativ können Letz- oder Endmeldungen anhand der relevanten Protokolldateien PR1 bis PRx mit dem jüngsten Erfassungs-Zeitstempel ermittelt werden. Weitere Zeitanalysen innerhalb einer Sequenz SQ oder einer Gruppe G sind möglich.

In einem weiteren Schritt werden die ermittelten Sequenzen SQ und/oder die ermittelten Gruppen G auf wiederkehrende Muster (= Protokollmuster = wiederkehrende gleiche Folge von Protokolldateien) analysiert und eine Mustererkennung durchgeführt. Bei Identifizierung von wiederkehrenden Mustern bei Auftreten der kodierten relevanten Protokolldateien PR1 bis PRx in der/den ermittelten Sequenz/en SQ und/oder der/den ermittelten Gruppe/n G wird mindestens eines dieser Muster als Referenzmuster RM für die zu analysierende/n Sequenz/en SQ und/oder Gruppe/n G von relevanten Protokolldateien PR1 bis PRx, insbesondere für einen zu analysierenden Zeitraum und/oder ein zu analysierendes Ereignis, ermittelt und zur weiteren Verarbeitung und Analyse gespeichert/vorgegeben.

Nachfolgend können die ermittelten, insbesondere vorangegangenen, momentanen und/oder zukünftig erwarteten, Sequenzen SQ und/oder Gruppen G von relevanten Protokolldateien PR1 bis PRx des zu analysierenden Zeitraums und/oder des zu analysierenden Ereignisses anhand des ermittelten Referenzmusters RM verglichen und bewertet werden.

Zusätzlich können statistische Verfahren zur Ermittlung des Auftretens von relevanten Protokolldateien PR1 bis PRx um ein zu analysierendes Ereignis E herum und des Auftretens des Ereignisses E selbst anhand der ermittelten Reihenfolge von generierten relevanten Protokolldateien PR1 bis PRx verwendet werden. So können anhand der ermittelten Anzahl von Sequenzen SQ mit Referenzmustern RM und der ermittelten Anzahl von Schlüsselparametern S in einem betrachteten Zeitraum eine minimale Eintrittswahrscheinlichkeit Wmin (=Minimalkonfidenz oder minimal support in %) für das Ereignis E bestimmt werden.

Die ermittelten relevanten Protokolldateien PR1 bis PRx, die ermittelten Sequenzen SQ von relevanten Protokolldateien PR1 bis PRx, die ermittelten Gruppen G, G1, G2 von relevanten Protokolldateien PR1 bis PRx und/oder die ermittelten minimalen Eintrittswahrscheinlichkeiten Wmin für ein oder mehrere Ereignisse E können anschließend in einem Speicher 10 hinterlegt werden.

Alternativ können diese der Leiteinheit 4 zur Ausgabe auf einem Bildschirm und zur weiteren Analyse und Evaluierung/Bewertung des/der Ereignisses/e E, insbesondere zur Ermittlung der Eintrittswahrscheinlichkeit W des Ereignisses, zugeführt werden.

So können beispielsweise mittels der hinterlegten relevanten Protokolldateien PR1 bis PRx anhand weiterer Filter- oder Verarbeitungsalgorithmen jene relevanten Protokolldateien PR1 bis PRx und/oder Sequenzen SQ von relevanten Protokolldateien PR1 bis PRx zur weiteren Reduzierung der Anzahl von zu untersuchenden relevanten Protokolldateien PR1 bis PRx und/oder Sequenzen SQ von diesen herausgefiltert oder entfernt werden, deren Eintrittswahrscheinlichkeit W kleiner als die minimale Eintrittswahrscheinlichkeit Wmin ist.

Eine weitere Ausführungsform sieht vor, dass ein Ursprungsereignis UE für eine der ermittelten Sequenzen SQ von relevanten Protokolldateien PR1 bis PRx vorgegeben oder ermittelt wird und diese ermittelte Sequenz SQ von relevanten Protokolldateien PR1 bis PRx um eine weitere Protokolldatei PR+1 ergänzt und eine erweiterte Sequenz SQ+1 von relevanten Protokolldateien PR1 bis PRx, PR+1 gebildet wird.

Beispielsweise kann bei einer weiteren Analyse mittels des Protokollanalysators 9 die erweiterte Sequenz SQ+1 von relevanten Protokolldateien PR1 bis PRx mit der weiteren Protokolldatei PR+1 (zum Beispiel SQ mit A,B erweitert zu SQ+1 mit A,B,C) mit dem ermittelten Referenzmuster RM verglichen werden. Bei Gleichheit dieser erweiterten Sequenz SQ+1 mit dem Referenzmuster RM wird eine weitere Protokolldatei PR+1 ergänzt, zum Beispiel SQ mit A,B und SQ+1 mit A,B,C,D.

Bei Ungleichheit dieser wird ermittelt, ob die Eintrittswahrscheinlichkeit W dieser erweiterten Sequenz SQ+1 größer oder kleiner als die minimale Eintrittswahrscheinlichkeit Wmin ist. Wenn die Eintrittswahrscheinlichkeit W dieser erweiterten Sequenz SQ+1 gleich oder kleiner als die minimale Eintrittswahrscheinlichkeit Wmin ist, wird das Ursprungsereignis UE aus dieser erweiterten Sequenz SQ+1 gelöscht.

Darüber hinaus kann mittels des implementierten Verfahrens diese erweiterte Sequenz SQ+1 von relevanten Protokolldateien PR1 bis PRx, PR+1 als möglicherweise eintretende erweiterte Sequenz SQ+1 von relevanten Protokolldateien PR1 bis PRx, PR+1 ermittelt werden, wenn die Sequenzlänge dieser erweiterten Sequenz SQ+1 größer als die Minimalsequenzlänge ist.

Zusätzlich kann als weitere Analyse vorgesehen sein, dass als mindestens ein Zeitparameter für die möglicherweise eintretende erweiterte Sequenz SQ+1 von relevanten Protokolldateien PR1 bis PRx, PR+1 mindestens der maximale Zeitabstand und/oder der minimale Zeitabstand zwischen benachbarten relevanten Protokolldateien PRx-1, PRx, PRx+1 innerhalb dieser erweiterten Sequenz SQ+1 ermittelt werden/wird. Dies ermöglicht die Ermittlung weiterer Zeitabhängigkeiten von relevanten Protokolldateien PR1 bis PRx für das betreffende Ereignis E und weitere Ermittlungen von statistischen Korrelationen der relevanten Protokolldateien PR1 bis PRx um das betreffende Ereignis E herum.

Ferner können Analyse bezüglich des Ursprungs oder Auslösers des betrachteten Ereignisses E ermittelt werden.

Das implementierte Verfahren des Protokollanalysators 9 ermöglicht eine einfache automatische Analyse von zeitlich um ein Schlüsselereignis SE herum generierten relevanten Protokolldateien PR1 bis PRx und die automatische Ermittlung von das Schlüsselereignis SE beschreibende und repräsentierende Referenzmuster RM für generierte Sequenzen SQ von relevanten Protokolldateien PR1 bis PRx.

Insbesondere kann der Protokollanalysator 9 an geeigneter Stelle in eine Komponente des Automatisierungssystems 1 implementiert sein.

## Patentansprüche

1. Verfahren zur Analyse und/oder Evaluierung von mindestens einem Ereignis (E) einer technischen Anlage aus einer Vielzahl von generierten Protokolldateien (P1 bis Pn) eines Automatisierungssystems (1) der technischen Anlage, umfassend folgende Schritte:
- Ermitteln einer Anzahl von relevanten Protokolldateien (PR1 bis PRx) aus der Vielzahl von generierten Protokolldateien (P1 bis Pn) anhand mindestens eines Protokollparameters,
- Kodieren der relevanten Protokolldateien (PR1 bis PRx) mittels mindestens eines zugehörigen Protokoll-Codes (C),
- Vorgabe mindestens eines Schlüsselparameters (S) für die Analyse und/oder die Evaluierung des Ereignisses (E),
- Identifizieren von mehrfachen relevanten Protokolldateien (PR1 bis PRx) anhand des mindestens einen Schlüsselparameters (S) aus den relevanten Protokolldateien (PR1 bis PRx), und
- Gruppieren der relevanten Protokolldateien(PR1 bis PRx) in eine Anzahl von Sequenzen (SQ) von relevanten Protokolldateien (PR1 bis PRx) anhand der Wiederholungsrate des Schlüsselparameters (S) in einem zu analysierenden Zeitfenster,
- Unterteilen mindestens einer Sequenz (SQ) der Anzahl von Sequenzen in eine erste Gruppe (G1) von relevanten Protokolldateien (PR1 bis PR7) vor dem Auftreten eines Schlüsselparameters (S) und eine zweite Gruppe (G2) von relevanten Protokolldateien (PR8 bis PR12) nach dem Auftreten des Schlüsselparameters (S) und voneinander separates Auswerten der Protokolldateien (PR1 bis PR7, PR8 bis PR12) der beiden Gruppen (G1, G2),
wobei als Schlüsselparameter (S) ein Zielereignis (ZE) und ein Startereignis (AE) für mindestens eine Sequenz (SQ) von relevanten Protokolldateien (PR1 bis PRx) vorgegeben werden, oder
wobei als Schlüsselparameter (S) eine Minimalsequenzlänge für eine Sequenz (SQ) von relevanten Protokolldateien (PR1 bis PRx) vorgegeben wird, oder
wobei als Schlüsselparameter ein Schlüsselereignis (SE) und/oder ein Schlüsselzeitpunkt/-raum ermittelt oder vorgegeben wird.

2. Verfahren nach Anspruch 1, wobei mehrere relevante Protokolldateien (PR1 bis PRx) mit gleichem Erfassungs-Zeitstempeln zu mindestens einer Gruppe (G, G1, G2) von relevanten Protokolldateien (PR1 bis PRx) zusammengefasst werden.

3. Verfahren nach einem der vorhergehenden Ansprüche, wobei mindestens ein Referenzmuster (RM) für eine Sequenz (SQ) von relevanten Protokolldateien (PR1 bis PRx) eines zu analysierenden Zeitraums und/oder eines zu analysierenden Ereignisses (E) identifiziert wird.

4. Verfahren nach Anspruch 3, wobei die ermittelten Sequenzen (SQ) von relevanten Protokolldateien (PR1 bis PRx) des zu analysierenden Zeitraums und/oder des zu analysierenden Ereignisses (E) anhand des Referenzmusters (RM) verglichen und bewertet werden.

5. Verfahren nach Anspruch 3 oder 4, wobei die ermittelten Gruppen (G, G1, G2) von relevanten Protokolldateien (PR1 bis PRx) des zu analysierenden Zeitraums und/oder des zu analysierenden Ereignisses (E) anhand des Referenzmusters (RM) verglichen und bewertet werden.

6. Verfahren nach einem der Ansprüche 3 bis 5, wobei anhand der ermittelten Anzahl von Sequenzen (SQ) von relevanten Protokolldateien (PR1 bis PRx) mit Referenzmustern (RM) und der ermittelten Anzahl von Schlüsselparametern (S) eine minimale Eintrittswahrscheinlichkeit (Wmin) für das Ereignis (E) bestimmt wird.

7. Verfahren nach einem der vorhergehenden Ansprüche, wobei ein Ursprungsereignis (UE) für eine der ermittelten Sequenzen (SQ) von relevanten Protokolldateien (PR1 bis PRx) vorgegeben wird und diese ermittelten Sequenzen (SQ) von relevanten Protokolldateien (PR1 bis PRx) um eine weitere Protokolldatei (PR+1) ergänzt und eine erweiterte Sequenz (SQ+1) von relevanten Protokolldateien (PR1 bis PRx) gebildet wird.

8. Verfahren nach Anspruch 7, wobei die erweiterte Sequenz (SQ+1) von relevanten Protokolldateien (PR1 bis PRx) mit dem Referenzmuster (RM) verglichen wird und bei Gleichheit dieser die erweiterte Sequenz (SQ+1) um eine weitere Protokolldatei (PR+1) ergänzt wird und bei Ungleichheit dieser ermittelt wird, ob die Eintrittswahrscheinlichkeit (W) dieser erweiterten Sequenz (SQ+1) größer oder kleiner als die minimale Eintrittswahrscheinlichkeit (Wmin) ist.

9. Verfahren nach Anspruch 8, wobei das Ursprungsereignis (UE) gelöscht wird, wenn die Eintrittswahrscheinlichkeit (W) dieser erweiterten Sequenz (SQ+1) gleich oder kleiner als die minimale Eintrittswahrscheinlichkeit (Wmin) ist.

10. Verfahren nach Anspruch 8 oder 9, wobei diese erweiterte Sequenz (SQ+1) von relevanten Protokolldateien (PR1 bis PRx) als möglicherweise eintretende erweiterte Sequenz (SQ+1) von relevanten Protokolldateien (PR1 bis PRx) ermittelt wird, wenn die Sequenzlänge dieser erweiterten Sequenz (SQ+1) größer als eine Minimalsequenzlänge ist.

11. Verfahren nach Anspruch 10, wobei als mindestens ein Zeitparameter für die möglicherweise eintretende erweiterte Sequenz (SQ+1) von relevanten Protokolldateien (PR1 bis PRx) mindestens der maximale Zeitabstand und/oder der minimale Zeitabstand zwischen benachbarten relevanten Protokolldateien (PR1 bis PRx) innerhalb dieser erweiterten Sequenz(SQ+1) ermittelt werden/wird.

12. Verwendung des Verfahrens nach einem der Ansprüche 1 bis 11 in einem Automatisierungssystem (1) einer technischen Anlage.

13. Automatisierungssystem (1) einer technischen Anlage, umfassend mindestens eine Bedien- und Beobachtungsebene (BB), eine Automatisierungsebene (AS) und eine Feldebene (FE), die miteinander über ein Kommunikationssystem verbunden sind, wobei in mindestens einer der Ebenen das Verfahren nach einem der Ansprüche 1 bis 11 implementiert ist.

## Claims

1. Method for analysing and/or evaluating at least one event (E) of a technical installation from a plurality of generated log files (P1 to Pn) of an automation system (1) of the technical installation, comprising the following steps:
- determining a number of relevant log files (PR1 to PRx) from the plurality of generated log files (P1 to Pn) based on at least one log parameter,
- encoding the relevant log files (PR1 to PRx) by means of at least one associated log code (C),
- predetermining at least one key parameter (S) for the analysis and/or evaluation of the event (E),
- identifying multiple relevant log files (PR1 to PRx) based on the at least one key parameter (S) from the relevant log files (PR1 to PRx), and
- grouping the relevant log files (PR1 to PRx) into a number of sequences (SQ) of relevant log files (PR1 to PRx) based on the repetition rate of the key parameter (S) in a time window to be analysed,
- dividing at least one sequence (SQ) of the number of sequences into a first group (G1) of relevant log files (PR1 to PR7) before the occurrence of a key parameter (S) and a second group (G2) of relevant log files (PR8 to PR12) after the occurrence of the key parameter (S) and evaluating the log files (PR1 to PR7, PR8 to PR12) of the two groups (G1, G2) separately from one another,
wherein a target event (ZE) and a start event (AE) for at least one sequence (SQ) of relevant log files (PR1 to PRx) are predetermined as key parameters (S), or
wherein a minimum sequence length for a sequence (SQ) of relevant log files (PR1 to PRx) is predetermined as a key parameter (S), or
wherein a key result (SE) and/or a key time point/period is determined or predetermined as key parameter(s).

2. Method according to claim 1, wherein a number of relevant log files (PR1 to PRx) with identical acquisition time stamps are brought together to form at least one group (G, G1, G2) of relevant log files (PR1 to PRx).

3. Method according to one of the preceding claims, wherein at least one reference pattern (RM) is identified for a sequence (SQ) of relevant log files (PR1 to PRx) of a time period to be analysed and/or of an event (E) to be analysed.

4. Method according to claim 3, wherein the determined sequences (SQ) of relevant log files (PR1 to PRx) of the time period to be analysed and/or of the event to be analysed (E) are compared and evaluated based on the reference pattern (RM).

5. Method according to claim 3 or 4, wherein the determined groups (G, G1, G2) of relevant log files (PR1 to PRx) of the time period to be analysed and/or of the event to be analysed (E) are compared and evaluated based on the reference pattern (RM).

6. Method according to one of claims 3 to 5, wherein a minimum probability of occurrence (Wmin) is determined for the event (E) based on the determined number of sequences (SQ) of relevant log files (PR1 to PRx) with reference patterns (RM) and the determined number of key parameters (S).

7. Method according to one of the preceding claims, wherein an original event (UE) is predetermined for one of the determined sequences (SQ) of relevant log files (PR1 to PRx) and these determined sequences (SQ) of relevant log files (PR1 to PRx) are supplemented with a further log file (PR+1) and an extended sequence (SQ+1) of relevant log files (PR1 to PRx) is formed.

8. Method according to claim 7, wherein the extended sequence (SQ+1) of relevant log files (PR1 to PRx) is compared with the reference pattern (RM) and if they are identical, the extended sequence (SQ+1) is supplemented with a further log file (PR+1) and if they are not identical, it is determined whether the probability of occurrence (W) of this extended sequence (SQ+1) is greater than or smaller than the minimum probability of occurrence (Wmin).

9. Method according to claim 8, wherein the original event (UE) is deleted, if the probability of occurrence (W) of this extended sequence (SQ+1) is equal to or smaller than the minimum probability of occurrence (Wmin).

10. Method according to claim 8 or 9, wherein this extended sequence (SQ+1) of relevant log files (PR1 to PRx) is determined as a possibly occurring extended sequence (SQ+1) of relevant log files (PR1 to PRx), if the sequence length of this extended sequence (SQ+1) is greater than a minimum sequence length.

11. Method according to claim 10, wherein at least the maximum time interval and/or the minimum time interval between adjacent relevant log files (PR1 to PRx) within this extended sequence (SQ+1) is/are determined as at least one time parameter for the possibly occurring extended sequence (SQ+1) of relevant log files (PR1 to PRx).

12. Use of the method according to one of claims 1 to 11 in an automation system (1) of a technical installation.

13. Automation system (1) of a technical installation, comprising at least one operating and observation level (BB), an automation level (AS) and a field level (FE), which are connected to one another by way of a communication system, with the method according to one of claims 1 to 11 being implemented in at least one of the levels.

## Revendications

1. Procédé d'analyse et/ou d'évaluation d'au moins un évènement (E) d'une installation technique à partir d'une pluralité de fichiers (P1 à Pn) journaux produits d'un système (1) d'automatisation de l'installation technique, comprenant les stades suivants :
- détermination d'un certain nombre de fichiers (PR1 à PRx) journaux pertinents dans la pluralité de fichiers (P1 à Pn) journaux produits, à l'aide d'au moins un paramètre de journal,
- codage des fichiers (PR1 à PRx) journaux pertinents au moyen d'un code (C) journal associé,
- prescription d'au moins un paramètre (S) de clé pour l'analyse et/ou l'évaluation de l'évènement (E),
- identification de fichiers (PR1 à Prx) journaux pertinents plusieurs fois, à l'aide du au moins un paramètre (S) de clé dans les fichiers (PR1 à PRx) journaux pertinents, et
- regroupement des fichiers (PR1 à PRx) journaux pertinents en un nombre de séquences (SQ) de fichiers (PR1 à PRx) journaux pertinents, à l'aide d'un taux de répétition du paramètre (S) de clé dans un créneau temporel à analyser,
- subdivision d'au moins une séquence (SQ) du nombre de séquences en un premier groupe (G1) de fichiers (PR1 à PR7) journaux pertinents avant l'apparition d'un paramètre (S) de clé et en un deuxième groupe (G2) de fichiers (PR8 à PR12) journaux pertinents après l'apparition du paramètre (S) de clé et exploitation séparée des fichiers (PR1 à PR7, PR8 à PR12) journaux des deux groupes (G1, G2),
dans lequel on prescrit, comme paramètre (S) de clé, un évènement (ZE) cible et un évènement (AE) de début d'au moins une séquence (SQ) de fichiers (PR1 à PRx) journaux pertinents, ou
dans lequel on prescrit comme paramètre(S) de clé une longueur minimum d'une séquence (SQ) de fichiers (PR1 à PRx) journaux pertinents, ou
dans lequel on détermine ou on prescrit comme paramètre de clé un évènement(SE) clé et/ou un instant/durée de clé.

2. Procédé suivant la revendication 1, dans lequel on rassemble plusieurs fichiers (PR1 à PRx) journaux pertinents ayant un même horodatage de détection, en au moins un groupe (G, G1,G2) de fichiers (PR1 à PRx) journaux pertinents.

3. Procédé suivant l'une des revendications précédentes, dans lequel on identifie au moins un modèle (RM) de référence pour une séquence (SQ) de fichiers (PR1, PRx) journaux pertinents d'une durée à analyser et/ou d'un évènement(E) à analyser.

4. Procédé suivant la revendication 3, dans lequel on compare et on évalue, à l'aide du modèle (RM) de référence les séquences (SQ) déterminées de fichiers (PR1à PRx) journaux pertinents de la durée à analyser et/ou de l'évènement(E) à analyser.

5. Procédé suivant la revendication 3 ou 4, dans lequel on compare et on évalue, à l'aide du modèle (RM) de référence, les groupes (G, G1,G2) déterminés de fichiers (PR1 à PRx) journaux pertinents de la durée à analyser et/ou de l'évènement (E) à analyser.

6. Procédé suivant l'une des revendications 3 à 5, dans lequel, à l'aide du nombre déterminé de séquences (SQ) de fichiers (PR1 à PRx) journaux pertinents, on détermine, avec des modèles (RM) de référence et le nombre déterminé de paramètres (S) de clé, une probabilité (Wmin) minimum d'apparition de l'évènement (E).

7. Procédé suivant l'une des revendications précédentes, dans lequel on prescrit un évènement (UE) d'origine de l'une des séquences (SQ) déterminées de fichiers (PR1 à PRx) journaux pertinents et on complète cette séquence (SQ) déterminée de fichiers (PR1 à PRx) journaux pertinents d'un autre fichier (PR+1) journal et on forme une séquence (SQ+1) agrandie de fichiers (PR1 à PRx) journaux pertinents.

8. Procédé suivant la revendication 7, dans lequel on compare la séquence (SQ+1) agrandie de fichiers (PR1 à PRx) journaux pertinents au modèle (RM) de référence et, s'il y a égalité, on complète la séquence (SQ+1) agrandie d'un autre fichier (PR+1) journal et s'il y a inégalité, on détermine si la probabilité (W) d'apparition de cette séquence (SQ+1) agrandie est plus grande ou plus petite que la probabilité (Wmin) minimum d'apparition.

9. Procédé suivant la revendication 8, dans lequel on efface l'évènement (UE) d'origine, si la probabilité (W) d'apparition de cette séquence (SQ+1) agrandie est inférieure ou égale à la probabilité (Wmin) minimum d'apparition.

10. Procédé suivant la revendication 8 ou 9, dans lequel on détermine cette séquence (SQ+1) agrandie de fichiers (PR1 à PRx) journaux pertinents, comme séquence (SQ+1) agrandie apparaissant éventuellement de fichiers (PR1 à PRx) journaux pertinents, si la longueur de cette séquence (SQ+1) agrandie est plus grande qu'une longueur minimum de séquence.

11. Procédé suivant la revendication 10, dans lequel on détermine, comme au moins un paramètre de temps pour la séquence (SQ+1) agrandie apparaissant éventuellement de fichiers (PR1 à PRx) journaux pertinents, au moins le laps de temps maximum et/ou le laps de temps minimum entre des fichiers (PR1 à PRx) journaux pertinents voisins dans cette séquence (SQ+1) agrandie.

12. Utilisation du procédé suivant l'une des revendications 1 à 11 dans un système (1) d'automatisation d'une installation technique.

13. Système (1) d'automatisation d'une installation technique, comprenant au moins un plan (BB) de commande et d'observation, un plan (AS) d'automatisation et un plan (FE) de site, qui communiquent entre eux par un système de communication, dans lequel au moins l'un des plans met en œuvre le procédé suivant l'une des revendications 1 à 11.
